# EUROPÄISCHE PATENTSCHRIFT

(11) **EP 3 034 335 B1**
(45) Veröffentlichungstag und Bekanntmachung des Hinweises auf die Patenterteilung: **19.06.2019**
(21) Anmeldenummer: 15199847.3
(22) Anmeldetag: 14.12.2015
(51) Int. Cl.: B60D 1/54, B60D 1/06, B60D 1/62

(54) **ANHÄNGEKUPPLUNG**
TRAILER COUPLING
ATTELAGE

(30) Priorität: 17.12.2014 DE 102014118879
(43) Veröffentlichungstag der Anmeldung: 22.06.2016
(73) Patentinhaber: Bosal ACPS Holding 2 B.V., 4131 PK Vianen (NL)
(72) Erfinder: Edelmann, Tobias, 70188 Stuttgart (DE); Mutlu, Ercan, 51109 Köln (DE)
(74) Vertreter: Hoeger, Stellrecht & Partner Patentanwälte mbB

(56) Entgegenhaltungen:
- DE-A1-102008 032 229
- DE-A1-102009 050 932
- DE-U1-202011 105 552

## Beschreibung

Die Erfindung betrifft eine Anhängekupplung umfassend einen an einem Heckbereich einer Fahrzeugkarosserie montierbaren Querträger, eine an dem Querträger angeordnete Schwenklagereinheit, mit welcher ein eine Kupplungskugel tragender Kugelhals um eine Schwenkachse zwischen einer Arbeitsstellung und einer Ruhestellung verschwenkbar gelagert ist, und eine am Kugelhals angeordnete Kontakteinheit, insbesondere eine Steckverbindungseinheit zur Herstellung einer elektrischen Steckverbindung, zur Herstellung einer elektrischen Verbindung mit einer an dem Kugelhals fixierbaren Einheit, insbesondere mit einem Stecker dieser Einheit, sowie einen von der Kontakteinheit zu einem fahrzeugseitig montierten Querträger geführten und zur Verbindung mit einem fahrzeugseitigen elektrischen Versorgungssystem vorgesehenen Kabelstrang.

Derartige Anhängekupplungen sind aus dem Stand der Technik, beispielsweise der DE 20 2011 105 552 U1, bekannt, bei diesen besteht das Problem, den Kabelstrang in geeigneter Weise von dem Kugelhals zu einer fahrzeugseitigen Anbindung zu führen.

Diese Aufgabe wird bei einer Anhängekupplung der eingangs beschriebenen Art erfindungsgemäß dadurch gelöst, dass ein von dem Kugelhals zu einer fest mit dem Querträger verbundenen Befestigungsstelle relativ zum Kugelhals und relativ zur Schwenklagereinheit bewegbar verlaufender Übergangsabschnitt des Kabelstrangs mindestens eine über einer sich quer zur Schwenkachse erstreckenden Stirnseite der Schwenklagereinheit verlaufende und beim Übergang von der Arbeitsstellung in die Ruhestellung oder umgekehrt größenvariable Schleife bildet, dass der Übergangsabschnitt zwischen dem Kugelhals und der Befestigungsstelle durch eine Führungseinheit relativ zur Schwenklagereinheit geführt und auf einer Seite der Führungseinheit frei verlaufend zum Kugelhals und auf der anderen Seite der Führungseinheit frei verlaufend zur Befestigungsstelle ausgebildet ist.

Der Vorteil der erfindungsgemäßen Lösung ist dabei darin zu sehen, dass durch die mindestens eine Schleife des Übergangsabschnitts eine ausreichend große Bewegbarkeit des Übergangsabschnitts geschaffen ist, die bei der Vielzahl der vorgesehenen Schwenkbewegungen zwischen der Ruhestellung und der Arbeitsstellung eine ausreichend große Lebensdauer des Übergangsabschnitts des Kabelstrangs ermöglicht.

Besonders günstig ist es, wenn der Übergangsabschnitt zwischen dem Kugelhals und der Befestigungsstelle zwei zumindest teilweise über einer Stirnseite der Schwenklagereinheit verlaufende und beim Übergang zwischen der Arbeitsstellung und der Ruhestellung sich hinsichtlich ihrer Größe verändernde Schleifen bildet.

Damit ist die Möglichkeit geschaffen, die mechanische Belastung des Übergangsabschnitts des Kabelstrangs möglichst gering zu halten.

Die Führung des Übergangsabschnitts des Kabelstrangs durch die Führungseinheit kann dabei in unterschiedlichster Art und Weise erfolgen.

Im einfachsten Fall kann die Führungseinheit eine mit der Schwenklagereinheit verbundene und den Übergangsabschnitt des Kabelstrangs führende Öse sein.

Eine besonders günstige Führung des Übergangsabschnitts des Kabelstrangs ist dann möglich, wenn die Führungseinheit einen den Übergangsabschnitt an einer Führungsstelle fixierend aufnehmenden Kabelstranghalter und ein den Kabelstranghalter drehbar haltendes Drehgelenk aufweist, das mit der Schwenklagereinheit verbunden ist.

Dadurch, dass der Kabelstranghalter nun über das Drehgelenk mit der Schwenklagereinheit verbunden ist, wird dem Übergangsabschnitt des Kabelstrangs die Möglichkeit eröffnet, sich so zu bewegen, dass eine möglichst gleichmäßige Veränderung der mindestens einen Schleife des Übergangsabschnitts, insbesondere eine möglichst gleichmäßige Veränderung beider Schleifen des Übergangsabschnitts erfolgt.

Dabei kann das Drehgelenk in unterschiedlichster Art und Weise ausgebildet sein und Drehbewegungen um verschiedenste Drehachsen vorsehen.

Besonders vorteilhaft ist es, wenn das Drehgelenk eine Drehung um eine ungefähr parallel zur Schwenkachse verlaufende Drehachse zulässt, wobei unter ungefähr parallel eine Abweichung von bis zu 30°, vorzugsweise bis zu 20°, noch besser bis zu 10°, von der exakten Parallelität zu verstehen ist.

Ferner ist vorzugsweise vorgesehen, dass das Drehgelenk den Kabelstranghalter in einem definierten Abstandsbereich von der Schwenklagereinheit, insbesondere von der Stirnseite der Schwenklagereinheit führt.

Dabei kann das Drehgelenk so ausgebildet sein, dass es eine bestimmte Abstandsvariation zulässt.

Besonders günstig ist es jedoch, wenn das Drehgelenk den Kabelstranghalter in einem definierten Abstand von der Stirnseite der Schwenklagereinheit führt.

Hinsichtlich der Ausbildung des Drehgelenks sind eine Vielzahl von konstruktiven Lösungen denkbar.

Eine vorteilhafte Lösung sieht vor, dass das Drehgelenk einen eine Gelenkachse definierenden Gelenkzapfen aufweist, an welchem eine Gelenkzapfenaufnahme drehbar gelagert ist.

Dabei kann der Gelenkzapfen entweder an der Schwenklagereinheit oder dem Kabelstranghalter und die Gelenkzapfenaufnahme entweder an dem Kabelstranghalter oder der Schwenklagereinheit vorgesehen sein.

Vorzugsweise ist das Drehgelenk dabei so ausgebildet, dass es lediglich eine einzige ungefähr parallel zur Schwenkachse verlaufende Drehachse aufweist und nicht mehrere Drehachsen aufweist.

Hinsichtlich der Lage der Drehachse relativ zur Schwenklagereinheit wurden im Zusammenhang mit der bisherigen Erläuterung der einzelnen Ausführungsbeispiele keine näheren Angaben gemacht.

So sieht eine vorteilhafte Lösung vor, dass die Drehachse eines innerhalb um die Schwenkachse verlaufenden zentralen Bereichs der Stirnseite an der Schwenklagereinheit angeordnet ist.

Dabei lässt sich der zentrale Bereich vorzugsweise dadurch definieren, dass dieser innerhalb eines Radius von maximal 3 cm um die Schwenkachse verläuft.

Günstiger ist es, wenn der zentrale Bereich innerhalb eines Radius von 2 cm um die Schwenkachse verläuft und noch günstiger ist es, wenn der zentrale Bereich innerhalb eines Radius von 1 cm um die Schwenkachse verläuft.

Besonders günstig ist es für die Bewegbarkeit des Übergangsabschnitts des Kabelstrangs, wenn die Drehachse so angeordnet ist, dass sie die Schwenkachse schneidet.

Eine besonders einfache Ausführungsform sieht vor, dass die Drehachse koaxial zur Schwenkachse verläuft.

Im Zusammenhang mit den bislang beschriebenen Ausführungsbeispielen der erfindungsgemäßen Lösung wurde nicht näher definiert, wie der Kabelstrang zwischen der Kontakteinheit und dem Übergangsabschnitt desselben verläuft.

Eine besonders günstige Lösung sieht vor, dass der Kabelstrang mit einem geführten Kabelstrangabschnitt von der Kontakteinheit an dem Kugelhals anliegend oder in einer dafür vorgesehenen Führung am Kugelhals verläuft.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine perspektivische teilweise aufgebrochene Ansicht eines Kraftfahrzeugs mit einer erfindungsgemäßen Anhängekupplung;
- Fig. 2: eine perspektivische Darstellung des Ausführungsbeispiels der erfindungsgemäßen Anhängekupplung;
- Fig. 3: eine Draufsicht in Richtung des Pfeils A in Fig. 2;
- Fig. 4: eine Draufsicht in Richtung des Pfeils B in Fig. 2;
- Fig. 5: eine vergrößerte perspektivische Ansicht in Richtung eines Pfeils C in Fig. 2 in der Arbeitsstellung;
- Fig. 6: eine vergrößerte perspektivische Ansicht in Richtung des Pfeils C in der Ruhestellung und

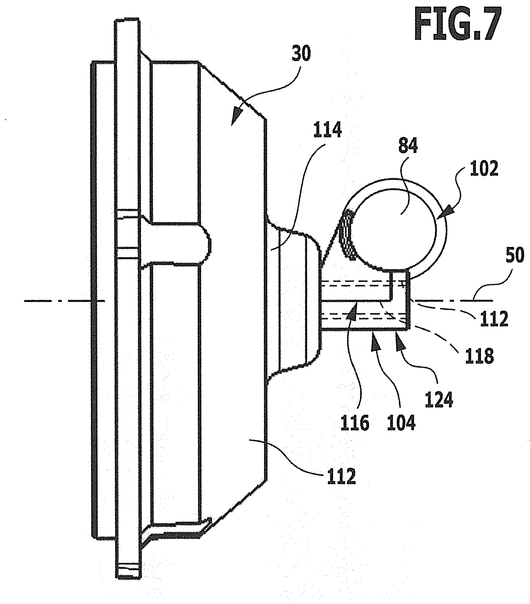

- Fig. 7: eine Seitenansicht eines Deckels der Schwenklagereinheit mit einem Kabelstranghalter und einem Drehgelenk zur Verbindung des Kabelstranghalters mit dem Deckel.

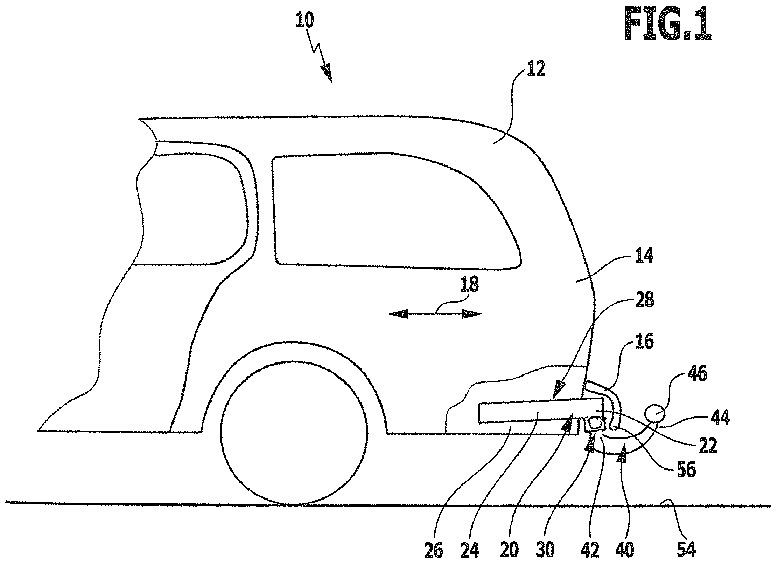

Ein in Fig. 1 als Ganzes mit 10 bezeichnetes Kraftfahrzeug umfasst eine Fahrzeugkarosserie 12, an welcher an einem Heckbereich 14 eine erfindungsgemäße Anhängekupplung 20 montiert ist, welche einen von einer Stoßfängereinheit 16 abgedeckten und sich quer zu einer Längsrichtung 18 der Fahrzeugkarosserie 12 und quer über dem Heckbereich 14 erstreckenden Querträger 22 sowie sich ungefähr parallel zur Längsrichtung 18 der Fahrzeugkarosserie entlang von Karosseriewandabschnitten 26 erstreckende und an diesen fixierte Seitenträger 24 aufweist, die zusammen mit dem Querträger 22 eine Halteeinheit 28 bilden, welche zum Teil durch die Fahrzeugkarosserie 12 und zum Teil durch die Stoßfängereinheit 16 abgedeckt ist.

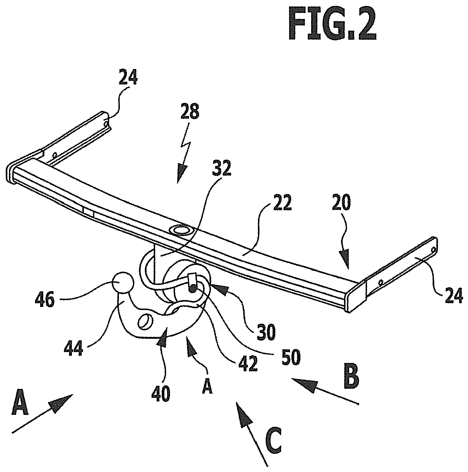

An der Halteeinheit 28 ist eine Haltebasis 32 einer als Ganzes mit 30 bezeichneten Schwenklagereinheit vorgesehen, mit welcher ein als Ganzes mit 40 bezeichneter Kugelhals mit einem ersten Ende 42 verbunden ist, der außerdem an einem zweiten Ende 44 eine mit 46 bezeichnete Kupplungskugel trägt, wie in Fig. 1 und 2 dargestellt.

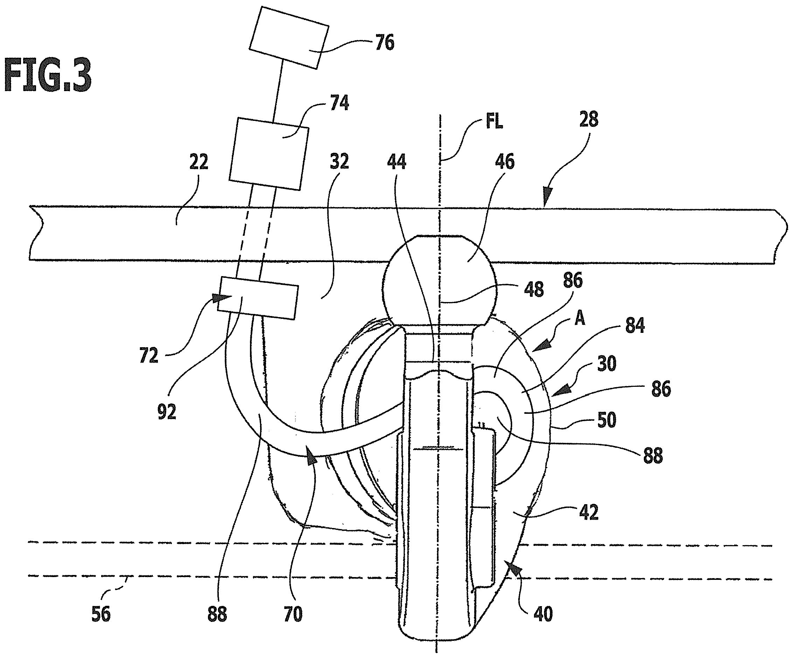

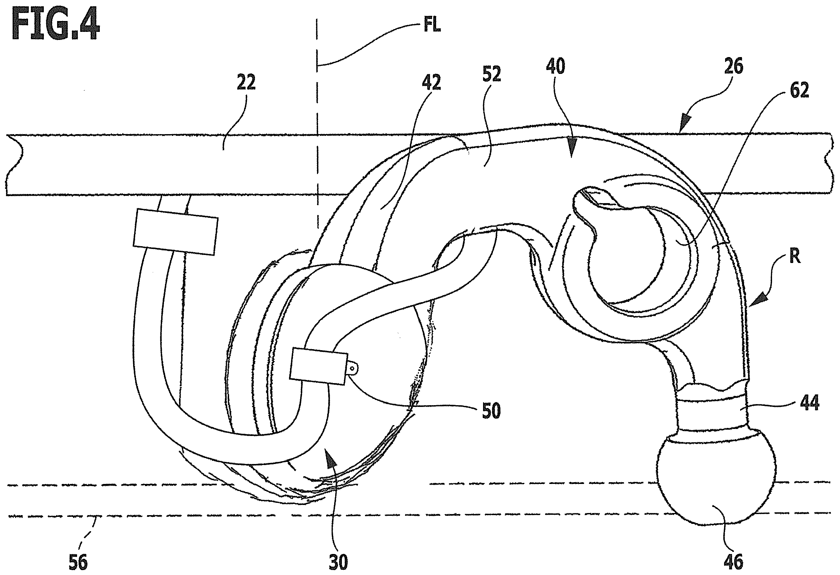

Durch die Schwenklagereinheit 30 besteht die Möglichkeit, den Kugelhals 40 von einer in Fig. 2 und 3 dargestellten Arbeitsstellung A, in welcher eine Kugelmittelachse 48 der Kupplungskugel 46 in einer Fahrzeuglängsmittelebene FL steht, um eine quer, insbesondere schräg, vorzugsweise in einem spitzen Winkel zur Fahrzeuglängsmittelebene FL verlaufende Schwenkachse 50 in eine in Fig. 4 dargestellte Ruhestellung R zu verschwenken, in welcher ein Mittelabschnitt 52 des Kugelhalses sich quer zur Fahrzeuglängsmittelebene FL erstreckt und die Kupplungskugel 46 seitlich der Fahrzeuglängsmittelebene FL liegt, wie in Fig. 4 dargestellt.

Insbesondere ist dabei der Kugelhals 40 in der Ruhestellung R in einer durch die Stoßfängereinheit 16 der Fahrzeugkarosserie 12 abgedeckten Stellung seitlich der Fahrzeuglängsmittelebene FL angeordnet.

Bei einer derartigen Ausrichtung der Schwenkachse 50 besteht die Möglichkeit, den Kugelhals 40 auf einer einer Fahrbahn 54 abgewandten Seite der Kupplungskugel 46 in der Ruhestellung anzuordnen.

Zumindest besteht die Möglichkeit, den Kugelhals 40 in der Ruhestellung in einem derartigen Abstand von der Fahrbahn 54 anzuordnen, dass er höher liegt als eine Unterkante 56 der Stoßfängereinheit 16, bezogen auf den Verlauf der Fahrbahn 54.

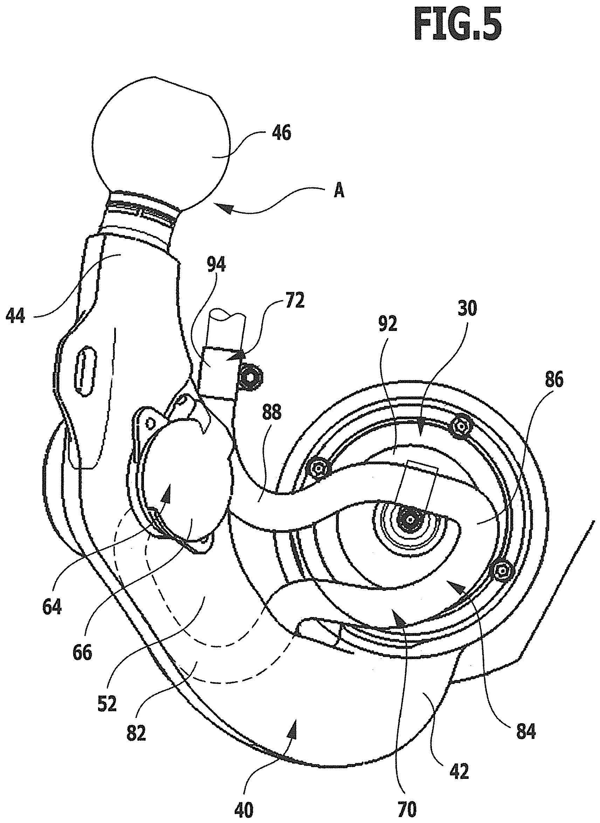

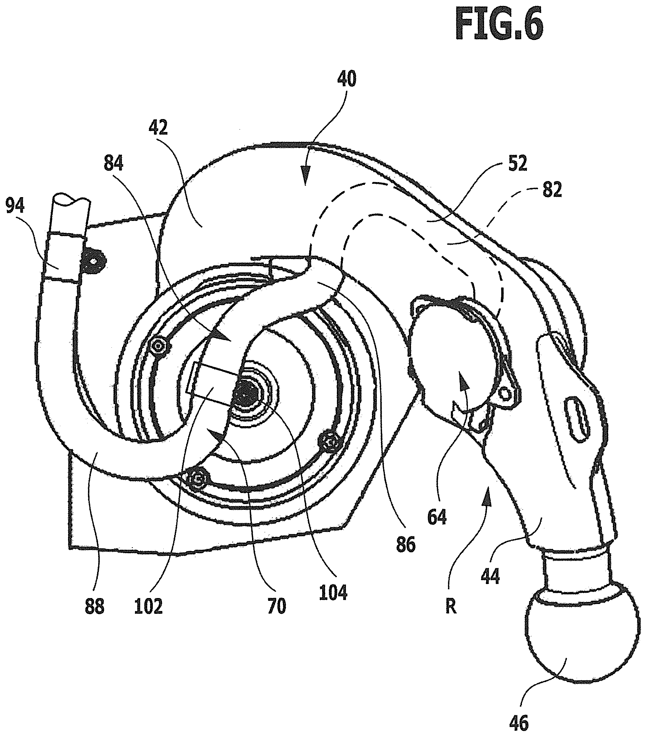

Wie insbesondere in Fig. 4 dargestellt, ist der Kugelhals 40 mit einer Aufnahme 62, in diesem Fall ausgebildet als den Kugelhals 40 durchsetzender Durchbruch, für eine in Fig. 5 und 6 dargestellte Kontakteinheit 64 versehen, die beispielsweise die Aufnahme 62 durchsetzt und auf einer Seite einen Verschlussdeckel 66 aufweist, über welchen, nach Öffnen desselben, in der Kontakteinheit 64 vorgesehene Steckkontakte zugänglich sind.

Vorzugsweise ist die Kontakteinheit 64 als Steckverbindungseinheit oder Steckdose so ausgebildet, dass in diese ein üblicher bei Anhängekupplungen verwendeter Kontaktstecker eines Anhängers oder einer an dem Kugelhals 46 montierten Zusatzeinrichtung einsteckbar ist, um übliche Leuchten, wie zum Beispiel Rückleuchten, Bremsleuchten und Blinkleuchten zu betreiben.

Von der Kontakteinheit 64 führt ein als Ganzes mit 70 bezeichneter Kabelstrang zu einer fest mit dem Querträger 22 und somit fest mit dem Kraftfahrzeug 10 verbundenen Befestigungsstelle 72 für den Kabelstrang 70 und von dieser Befestigungsstelle 72 zu einer Anschlusseinheit 74 eines elektrischen Versorgungssystems 76 des Kraftfahrzeugs 10.

Der Kabelstrang 70 verläuft vorzugsweise, wie in Fig. 5 und 6 dargestellt, mit einem geführten Abschnitt 82 längs des Kugelhalses 40, insbesondere längs des Mittelabschnitts 52 desselben, und im Anschluss an den geführten Abschnitt 82 in Form eines Übergangsabschnitts 84 frei vom Kugelhals 40 in der Arbeitsstellung und in der Ruhestellung in Form mindestens einer ersten Schleife 86 und vorzugsweise einer zweiten Schleife 88 im Abstand von einer der Haltebasis 32 gegenüberliegenden Stirnseite 92 der Schwenklagereinheit 30 bis zu der Befestigungsstelle 72, an welcher vorzugsweise ein Fixieren des Kabelstrangs 70 mit dem Halteelemente 32 der Schwenklagereinheit 30 mittels eines Kabelhalters 94 erfolgt.

Beim Verschwenken von der in Fig. 2, 3 und 5 dargestellten Arbeitsstellung des Kugelhalses 40 in die Ruhestellung R verändert sich die Form der Schleifen 86 und 88 derart, dass bezogen auf die Arbeitsstellung A die Größe der ersten Schleife 86 beim Übergang zur Ruhestellung abnimmt, während die Größe der zweiten Schleife 88 zunimmt, wie ein im Vergleich der Fig. 5 und 6 dargestellt.

Um im Betrieb der erfindungsgemäßen Anhängekupplung 20 eine Beschädigung des Kabelstrangs 70, insbesondere im Bereich seines Übergangsabschnitts 84, durch unkontrollierte Bewegungen und durch unerwünschtes Festhängen an einzelnen Baugruppen zu verhindern, ist ein als Ganzes mit 102 bezeichneter Kabelstranghalter vorgesehen, welcher über ein Drehgelenk 104 mit der Schwenklagereinheit 30 verbunden ist.

Vorzugsweise ist hierzu die Schwenklagereinheit 30 mit einem die Stirnseite 92 bildenden Deckel 112 versehen, welcher in einem zentralen Bereich 114 der Stirnseite 92 einen Gelenkzapfen 116 trägt, dessen Mittelachse 118 eine Gelenkachse definiert.

Der Gelenkzapfen 116 greift dabei in eine Gelenkzapfenaufnahme 122 ein, die in einer Gelenkhülse 124 vorgesehen ist, so dass die Gelenkhülse 124 um die Drehachse 118, gebildet durch den Gelenkzapfen 116, drehbar ist.

Mit der Gelenkhülse 124 ist der Kabelstranghalter 102 fest verbunden, so dass der Kabelstranghalter aufgrund des Drehgelenks 104 um die Drehachse 118 drehbar ist.

Der Gelenkzapfen 116 kann dabei so angeordnet sein, dass er innerhalb des zentralen Bereichs 114 um die Schwenkachse 50 angeordnet ist, wobei der zentrale Bereich sich maximal bis zu einem Radius von 2 cm um die Schwenkachse 50 erstreckt, vorzugsweise sogar nur bis zu einem Radius von 1 cm.

Das in den Figuren dargestellte bevorzugte Ausführungsbeispiel sieht dabei vor, dass der Gelenkzapfen 116 koaxial zur Schwenkachse 50 angeordnet ist, so dass die Drehachse 118 ebenfalls mit der Schwenkachse 50 zusammenfällt.

Eine besonders einfache Lösung sieht vor, dass der Gelenkzapfen 116 ein Außengewinde aufweist, auf welches die mit einem Innengewinde versehene Gelenkzapfenaufnahme so aufgeschraubt ist, dass diese sich in der vorgesehenen Art und Weise relativ zum Gelenkzapfen verdrehen kann.

Insbesondere ist der Kabelstranghalter 102, wie beispielweise in Fig. 5 und 6 dargestellt, so an dem Übergangsabschnitt 84 angeordnet, dass er zwischen den Schleifen 86 und 88 des Übergangsabschnitts 84 des Kabelstrangs 70 liegt und somit insgesamt den gesamten Übergangsabschnitt 84 in einem definierten Abstand von der Stirnseite 92 der Schwenklagereinheit 30 führt, und dennoch eine weitgehend ungestörte Bewegbarkeit des Übergangsabschnitts 84 zur variablen Ausbildung der Schleifen 86 und 88 zulässt, wobei insbesondere durch das Drehgelenk 104 der Kabelstranghalter 102 sich um die Drehachse 18 drehen kann und somit eine variable Ausbildung der Schleifen 86 und 88 beim Übergang von der Arbeitsstellung A in die Ruhestellung R oder umgekehrt von der Ruhestellung R in die Arbeitsstellung A zulässt.

## Patentansprüche

1. Anhängekupplung umfassend einen an einem Heckbereich (14) einer Fahrzeugkarosserie (12) montierbaren Querträger (22), eine an dem Querträger (22) angeordnete Schwenklagereinheit (30), mit welcher ein eine Kupplungskugel (46) tragender Kugelhals (40) um eine Schwenkachse (50) zwischen einer Arbeitsstellung (A) und einer Ruhestellung (R) verschwenkbar gelagert ist, und eine am Kugelhals (40) angeordnete Kontakteinheit (64) zur Herstellung einer elektrischen Verbindung mit einer an dem Kugelhals (40) fixierbaren Einheit, sowie einen von der Kontakteinheit (64) zu einem fahrzeugseitig montierten Querträger (22) geführten und zur Verbindung mit einem fahrzeugseitigen elektrischen Versorgungssystem (76) vorgesehenen Kabelstrang (70),
**dadurch gekennzeichnet, dass** ein von dem Kugelhals (40) zu einer fest mit dem Querträger (22) verbundenen Befestigungsstelle (72) relativ zum Kugelhals (40) und relativ zur Schwenklagereinheit (30) bewegbar verlaufender Übergangsabschnitt (84) des Kabelstrangs (70) mindestens eine über einer sich quer zur Schwenkachse (50) erstreckenden Stirnseite (92) der Schwenklagereinheit (30) verlaufende und beim Übergang von der Arbeitsstellung (A) in die Ruhestellung (R) oder umgekehrt größenvariable Schleife (86, 88) bildet, dass der Übergangsabschnitt (84) zwischen dem Kugelhals (40) und der Befestigungsstelle (72) durch eine Führungseinheit (102, 104) relativ zur Schwenklagereinheit (30) geführt und auf einer Seite der Führungseinheit (102, 104) frei verlaufend zum Kugelhals (40) und auf der anderen Seite der Führungseinheit (102, 104) frei verlaufend zur Befestigungsstelle (72) ausgebildet ist.

2. Anhängekupplung nach Anspruch 1, **dadurch gekennzeichnet, dass** der Übergangsabschnitt (84) zwischen dem Kugelhals (40) und der Befestigungsstelle (72) zwei zumindest teilweise über der Stirnseite (92) der Schwenklagereinheit (30) verlaufende und beim Übergang zwischen der Arbeitsstellung (A) und der Ruhestellung (R) sich hinsichtlich ihrer Größe verändernde Schleifen (86, 88) bildet.

3. Anhängekupplung nach Anspruch 1 oder 2, **dadurch gekennzeichnet, dass** die Führungseinheit (102, 104) einen den Übergangsabschnitt (84) an einer Führungsstelle fixierend aufnehmenden Kabelstranghalter (102) und ein den Kabelstranghalter (102) drehbar haltendes Drehgelenk (104) aufweist, das mit der Schwenklagereinheit (30) verbunden ist.

4. Anhängekupplung nach Anspruch 3, **dadurch gekennzeichnet, dass** das Drehgelenk (104) eine Drehung um eine ungefähr parallel zur Schwenkachse (50) verlaufende Drehachse (118) zulässt.

5. Anhängekupplung nach Anspruch 3 oder 4, **dadurch gekennzeichnet, dass** das Drehgelenk (104) den Kabelstranghalter (102) in einem definierten Abstandsbereich von der Schwenklagereinheit (30), insbesondere von der Stirnseite (92) der Schwenklagereinheit (30), führt.

6. Anhängekupplung nach Anspruch 5, **dadurch gekennzeichnet, dass** das Drehgelenk (104) den Kabelstranghalter (102) in einem definierten Abstand von der Stirnseite (92) der Schwenklagereinheit (30) führt.

7. Anhängekupplung nach einem der Ansprüche 3 bis 6, **dadurch gekennzeichnet, dass** das Drehgelenk (104) einen die Gelenkachse (118) definierenden Gelenkzapfen (116) aufweist, an welchem eine Gelenkzapfenaufnahme (122) drehbar gelagert ist.

8. Anhängekupplung nach einem der Ansprüche 3 bis 7, **dadurch gekennzeichnet, dass** die Drehachse (118) innerhalb eines um die Schwenkachse (50) verlaufenden zentralen Bereichs (114) der Stirnseite (92) der Schwenklagereinheit (30) angeordnet ist.

9. Anhängekupplung nach Anspruch 8, **dadurch gekennzeichnet, dass** der zentrale Bereich (114) innerhalb eines Radius von maximal 3 cm um die Schwenkachse (50) verläuft.

10. Anhängekupplung nach einem der Ansprüche 3 bis 9, **dadurch gekennzeichnet, dass** die Drehachse (118) so angeordnet ist, dass sie die Schwenkachse (50) schneidet.

11. Anhängekupplung nach Anspruch 10, **dadurch gekennzeichnet, dass** die Drehachse (118) koaxial zur Schwenkachse (50) verläuft.

12. Anhängekupplung nach einem der voranstehenden Ansprüche, **dadurch gekennzeichnet, dass** der Kabelstrang (70) mit einem geführten Kabelstrangabschnitt (82) von der Kontakteinheit (64) an dem Kugelhals (40) anliegend oder in einer dafür vorgesehenen Führung am Kugelhals (40) verläuft.

## Claims

1. Trailer coupling comprising a cross member (22) which is mountable on a rear region (14) of a vehicle body (12), a pivot bearing unit (30) arranged on the cross member (22), by means of which a ball neck (40) carrying a coupling ball (46) is pivotally mounted about a pivot axis (50) between a working position (A) and a rest position (R), and a contact unit (64) arranged on the ball neck (40) for establishing an electrical connection to a unit which is fixable on the ball neck (40), and comprising a cable harness (70) guided from the contact unit (64) to a vehicle-mounted cross member (22) and provided for connecting to a vehicle electrical supply system (76),
**characterised in that** a transition portion (84) of the cable harness (70) which runs in a movable manner relative to the ball neck (40) and relative to the pivot bearing unit (30) from the ball neck (40) to an attachment point (72) connected fixedly to the cross member (22) forms at least one loop (86, 88) which extends over an end face (92) of the pivot bearing unit (30) extending transversely to the pivot axis (50) and which varies in size when transferring from the working position (A) to the rest position (R) or vice versa, **in that**, between the ball neck (40) and the attachment point (72), the transition portion (84) is guided relative to the pivot bearing unit (30) by a guide unit (102, 104), and is configured to run freely to the ball neck (40) on one side of the guide unit (102, 104) and to run freely to the attachment point (72) on the other side of the guide unit (102, 104).

2. Trailer coupling according to claim 1, **characterised in that**, between the ball neck (40) and the attachment point (72), the transition portion (84) forms two loops (86, 88) which extend least in part over the end face (92) of the pivot bearing unit (30) and which vary with regard to their size when transferring between the working position (A) and the rest position (R).

3. Trailer coupling according to claim 1 or 2, **characterised in that** the guide unit (102, 104) has a cable harness holder (102) receiving the transition portion (84) at a guide point in a fixing manner and a rotary joint (104) rotatably holding the cable harness holder (102), which rotary joint is connected to the pivot bearing unit (30).

4. Trailer coupling according to claim 3, **characterised in that** the rotary joint (104) allows a rotation about a rotation axis (118) running approximately parallel to the pivot axis (50).

5. Trailer coupling according to either claim 3 or claim 4, **characterised in that** the rotary joint (104) guides the cable harness holder (102) in a defined spacing range from the pivot bearing unit (30), in particular from the end face (92) of the pivot bearing unit (30).

6. Trailer coupling according to claim 5, **characterised in that** the rotary joint (104) guides the cable harness holder (102) at a defined spacing from the end face (92) of the pivot bearing unit (30).

7. Trailer coupling according to any of claims 3 to 6, **characterised in that** the rotary joint (104) has a joint pin (116) defining the joint axis (118), a joint pin receptacle (122) being rotatably mounted on the joint pin.

8. Trailer coupling according to any of claims 3 to 7, **characterised in that** the rotation axis (118) is arranged within a central region (114) of the end face (92) of the pivot bearing unit (30) extending around the pivot axis (50).

9. Trailer coupling according to claim 8, **characterised in that** the central region (114) extends within a radius of at most 3 cm around the pivot axis (50).

10. Trailer coupling according to any of claims 3 to 9, **characterised in that** the rotation axis (118) is arranged such that it intersects the pivot axis (50).

11. Trailer coupling according to claim 10, **characterised in that** the rotation axis (118) extends coaxially with the pivot axis (50).

12. Trailer coupling according to any of the preceding claims, **characterised in that** the cable harness (70) runs with a guided cable harness portion (82) from the contact unit (64) lying on the ball neck (40) or in a guide on the ball neck (40) provided for this.

## Revendications

1. Attelage comprenant une traverse (22) pouvant être montée sur une zone arrière (14) d'une carrosserie de véhicule (12), une unité palier pivotant (30) agencée sur la traverse (22), à l'aide de laquelle un col porte-boule (40) portant une boule d'attelage (46) est amené à pivoter autour d'un axe de pivotement (50) entre une position de travail (A) et une position de repos (R), et une unité de contact (64) agencée sur le col porte-boule (40) et destinée à établir une liaison électrique avec une unité pouvant être fixée au col porte-boule (40), ainsi qu'un faisceau de câbles (70) guidé de l'unité de contact (64) vers une traverse (22) montée côté véhicule et à relier à un système d'alimentation électrique (76) côté véhicule,
**caractérisé en ce qu'**une partie de transition (84) du faisceau de câbles (70), laquelle s'étend du col porte-boule (40) à un point de fixation (72) relié fixement à la traverse (22) et mobile par rapport au col porte-boule (40) et par rapport à l'unité palier pivotant (30), forme au moins une boucle (86, 88) s'étendant sur une face frontale (92) de l'unité palier pivotant (30) s'étendant transversalement à l'axe de pivotement (50), et dont la taille varie lors de la transition de la position de travail (A) à la position de repos (R) ou inversement, **en ce que** la partie de transition (84) entre le col porte-boule (40) et le point de fixation (72) est guidée par une unité de guidage (102, 104) par rapport à l'unité palier pivotant (30) et est réalisée sur une face de l'unité de guidage (102, 104) de manière à s'étendre librement en direction du col porte-boule (40) et sur l'autre face de l'unité de guidage (102, 104) de manière à s'étendre librement en direction du point de fixation (72).

2. Attelage selon la revendication 1, **caractérisé en ce que** la partie de transition (84) entre le col porte-boule (40) et le point de fixation (72) forme deux boucles (86, 88) s'étendant au moins en partie sur la face frontale (92) de l'unité palier pivotant (30) et dont la taille varie lors de la transition entre la position de travail (A) et la position de repos (R).

3. Attelage selon la revendication 1 ou 2, **caractérisé en ce que** l'unité de guidage (102, 104) présente un support de faisceau de câbles (102) logeant la partie de transition (84) avec fixation en un point de guidage et une articulation tournante (104) qui retient le support de faisceau de câbles (102) en rotation et qui est reliée à l'unité palier pivotant (30).

4. Attelage selon la revendication 3, **caractérisé en ce que** l'articulation tournante (104) autorise une rotation autour d'un axe de rotation (118) s'étendant à peu près parallèlement à l'axe de pivotement (50).

5. Attelage selon la revendication 3 ou 4, **caractérisé en ce que** l'articulation tournante (104) guide le support de faisceau de câbles (102) dans une zone d'espacement définie par rapport à l'unité palier pivotant (30), en particulier par rapport à la face frontale (92) de l'unité palier pivotant (30).

6. Attelage selon la revendication 5, **caractérisé en ce que** l'articulation tournante (104) guide le support de faisceau de câbles (102) dans un espacement défini par rapport à la face frontale (92) de l'unité palier pivotant (30).

7. Attelage selon l'une quelconque des revendications 3 à 6, **caractérisé en ce que** l'articulation tournante (104) présente un pivot (116) qui définit l'axe d'articulation (118) et sur lequel un logement de pivot (122) est monté en rotation.

8. Attelage selon l'une quelconque des revendications 3 à 7, **caractérisé en ce que** l'axe de rotation (118) est agencé à l'intérieur d'une zone centrale (114) de la face frontale (92) de l'unité palier pivotant (30), laquelle zone s'étend autour de l'axe de pivotement (50).

9. Attelage selon la revendication 8, **caractérisé en ce que** la zone centrale (114) s'étend dans un rayon de maximum 3 cm autour de l'axe de pivotement (50).

10. Attelage selon l'une quelconque des revendications 3 à 9, **caractérisé en ce que** l'axe de rotation (118) est agencé de telle sorte qu'il coupe l'axe de pivotement (50).

11. Attelage selon la revendication 10, **caractérisé en ce que** l'axe de rotation (118) s'étend de manière coaxiale par rapport à l'axe de pivotement (50).

12. Attelage selon l'une quelconque des revendications, **caractérisé en ce que** le faisceau de câbles (70) s'étend avec une partie de faisceau de câbles (82) guidée depuis l'unité de contact (64) de manière à s'appliquer contre le col porte-boule (40) ou s'étend sur le col porte-boule (40) dans un guidage prévu à cet effet.
